# FASCICULE DE BREVET EUROPEEN

(11) **EP 0 514 530 B1**
(45) Date de publication et mention de la délivrance du brevet: **20.11.1996**
(21) Numéro de dépôt: 92902424.8
(22) Date de dépôt: 05.12.1991
(51) Int. Cl.: G01D 5/14, G01B 7/30

(54) **CAPTEUR MAGNETIQUE DE POSITION ET DE VITESSE A SONDE DE HALL**
MAGNETISCHER LAGE- UND GESCHWINDIGKEITSSENSOR MIT HALLSONDE
MAGNETIC POSITION AND SPEED SENSOR HAVING A HALL PROBE

(30) Priorité: 05.12.1990 FR 9015223
(43) Date de publication de la demande: 25.11.1992
(73) Titulaire: MOVING MAGNET TECHNOLOGIES S.A., 25000 Besançon (FR)
(72) Inventeur: OUDET, Claude, F-25000 Besançon (FR); PRUDHAM, Daniel, F-25220 Thise (FR)
(74) Mandataire: Kopacz, William James
(86) Numéro de dépôt international: FR9100973
(87) Numéro de publication internationale: WO9210722

(56) Documents cités:
- EP-A- 0 337 824
- EP-A- 0 359 853
- DE-A- 2 923 644
- GB-A- 2 159 004

## Description

La présente invention concerne un capteur magnétique de position, et selon une variante un capteur magnétique de position et de vitesse.

On connaît dans l'art antérieur des capteurs de position mettant en oeuvre des sondes de Hall détectant le flux magnétique généré par un aimant en déplacement relatif par rapport à la sonde de Hall. En particulier, le brevet français 2624966 décrit un codeur pour une roue d'impression comprenant un détecteur linéaire à effet Hall et un aimant permanent montés dans un arbre en métal non ferreux présentant une bague formant une spirale conductrice de flux moulée dans la roue et encerclant l'arbre. La position angulaire de la roue compression est déterminée en valeur absolue par l'amplitude àu signai par rapport au point de transition de la spirale. Dans un autre mode de réalisation, un second détecteur à effet hall est placé sur l'arbre en étant opposé au premier détecteur pour fournir un signal renforcé.

Les capteurs ainsi réalisés ne présentent pas un signal réellement linéaire, et on a dans l'art antérieur remédié à cet inconvénient en numérisant le signal délivré par la sonde de Hall et en traitant le signal par des moyens informatiques.

On connaît dans l'état de la technique le brevet allemand DE-A-29 23 644 décrivant un capteur de position comportant un stator définissant un entrefer à l'intérieur duquel se déplace un aimant mobile solidaire d'un moyen d'accouplement. Ce capteur comporte deux parties entre lesquelles se déplace une parties mobile comportant un aimant. Un autre document connu, le brevet européen EP-A-0 337 824 divulgue un capteur de roulement comportant une couronne présentant une alternance de pôles aimantés défilants devant une sonde de Hall.

On a également proposé dans l'art antérieur de remédier au défaut de linéarité des capteurs magnétiques de position par des géométries complexes, Lors du colloque Européen sur les "aimants modernes et nouvelles machines à aimants" qui s'est tenu à GRENOBLE du 13 au 15 juin 1990, un capteur de position délivrant un signal de sortie sensiblement proportionnel à la position angulaire a été présenté. Ce capteur comportait une bague aimantée de forme elliptique selon un premier mode de réalisation, ou une géométrie qualifiée d'originale composée de deux arcs de cercle. L'erreur de linéarité est ainsi annulée par l'excentricité. Si sur le plan théorique cette solution est intéressante, elle est techniquement difficile à réaliser pour des capteurs produits industriellement en grandes séries. Le coût de fabrication est de ce fait excessif pour de nombreuses applications.

L'objet de la présente invention est de remédier à ces inconvénients en proposant un capteur de position angulaire ou linéaire de faible coût de fabrication, présentant une erreur de linéarité inférieue à un pour cent et dont l'étendue de la mesure est peu inférieure à la longueur d'un pôle magnétique.

Le capteur de position selon la présente invention comporte un stator définissant un entrefer à l'intérieur duquel se déplace un aimant mobile solidaire d'un moyen d'accouplement. Le capteur comporte en outre deux entrefers secondaires sensiblement perpendiculaires à l'entrefer principal, une sonde de Hall mesurant la variation de l'induction dans l'un au moins des entrefers secondaires. Le stator est constitué par une première partie fixe et une deuxième partie qui peut être soit fixe, soit mobile. Les deux parties définissent entre elles ledit entrefer dans lequel se déplace la partie aimantée de l'organe mobile. L'organe mobile présente au moins deux parties minces aimantées transversalement en sens alterné réalisées en un matériau présentant dans tout le domaine de travail une caractéristique de désaimantation pratiquement linéaire et une perméabilité réversible proche de celle de l'air. La partie statorique fixe présente deux entrefers secondaires perpendiculaire à l'entrefer dans lequel se déplace l'organe mobile, une sonde de Hall étant logée dans ledit entrefer secondaire. Le rapport L/E est avantageusement supérieur à 6, et de préférence supérieur à 10, où L désigne la largeur linéaire du pôle magnétique dans le cas d'un capteur linéaire, où la longueur de l'arc correspondant au rayon moyen du pôle, dans le cas d'un capteur rotatif et où E désigne la largeur de l'entrefer. Selon un mode de réalisation particulier, l'organe mobile ne comporte qu'une seule partie mince aimantée transversalement, présentant la forme d'une tuile s'étendant sur 120° pour un actionneur à rotor cylindrique rotatif ou mobile en translation, ou la forme d'un demi disque pour un actionneur rotatif plat. Le signal de sortie est toutefois de plus faible amplitude et de moins bonne qualité que dans le mode de réalisation mettant en oeuvre au moins deux parties aimantées.

La sonde de Hall engendre un signal électrique proportionnel à l'induction qui la traverse. Pour que cette sonde délivre un signal fonction linéaire de la position angulaire ou linéaire, il faut la placer dans un champ magnétique qui varie aussi linéairement que possible avec la position.

Au sens du présent brevet on désigne par stator l'ensemble des constituants du circuits à haute perméabilité magnétique, formé par une partie fixe, et une deuxième partie qui dans la plupart des cas est également fixe, mais dans certains cas particuliers est solidaire de l'aimant mobile.

Selon un mode de réalisation particulier, le stator est constitué par une première partie fixe et une deuxième partie solidaire de la partie aimantée de l'organe mobile. Bien que ce mode de réalisation augmente sensiblement l'inertie propre du capteur, il permet de renforcer la résistance mécanique de l'organe mobile et donc d'utiliser éventuellement des matériaux magnétiques fragiles.

Selon une première variante, le stator est constitué par deux bagues coaxiales, la bague extérieure comportant au moins deux entrefers radiaux dans un desquels est disposée la sonde de Hall, l'organe mobile étant constitué par un cylindre aimanté coaxial auxdites bagues statoriques et mobile en rotation autour de l'axe de symétrie. La course de l'organe mobile est de C/2 de part et d'autre d'une position médiane dans laquelle la zone de transition entre les deux parties aimantées de l'organe mobile est dans le plan perpendiculaire au plan de symétrie de l'entrefer secondaire radial dans lequel est logé la sonde de Hall, C étant légèrement inférieur à π.

Ce mode de réalisation permet de réaliser des capteurs de faible dimension délivrant un signal de sortie proportionnel à la position angulaire avec une grande précision et sur une course importante.

Selon une deuxième variante, l'organe mobile est constitué par un disque mince présentant deux parties aimantées transversalement s'étendant chacune sur environ π, le stator étant constitué d'une première partie fixe présentant un entrefer radial secondaire dans lequel est logé une sonde de Hall et une deuxième partie fixe ou mobile constituée par un disque en un matériau doux

Avantageusement, l'entrefer est défini par une butée à bille disposée entre l'organe mobile et la partie statorique fixe. l'attraction entre les parties aimantées de l'organe mobile et la partie statorique fixe assure le positionnement et le centrage de l'organe mobile. Le déplacement engendré par cette attraction est limité par la butée à billes qui permet toutefois de conserver une certaine souplesse d'alignement et conduit à une grande résistance aux chocs et aux vibrations.

Selon un mode de réalisation particulier, la partie statorique fixe comporte deux sondes de Hall logées chacune dans l'un desdits entrefers secondaires.

En sommant les signaux délivrés par chacune desdites sondes de Hall, on atténue les éventuels défauts de géométrie du capteur de position.

Selon une troisième variante, le stator est constitué par une partie fixe présentant trois pôles statoriques et une deuxième partie définissant entre elles un entrefer dans lequel l'organe mobile se déplace linéairement.

Selon un mode de réalisation particulier, la partie statorique fixe comporte en outre une bobine captrice de la variation temporelle du flux magnétique logée dans l'un des entrefers secondaires.

Cette bobine délivre un signal électrique proportionnel à la vitesse relative de l'organe mobile par rapport à ladite bobine.

Avantageusement, la partie statorique fixe comporte en outre un logement pour une sonde de température.

Cette sonde permet de compenser les variations des caractéristiques des parties aimantées et/ou des sondes de Hall sous l'effet de la température et donc de mettre en oeuvre des composants de prix de revient modéré. Cette sonde de température peut être logée dans l'un des entrefers secondaires.

La présente invention sera mieux comprise à la lecture de la description qui suit, concernant plusieurs exemples de réalisation ne constituant en aucune façon une limitation de la portée de l'invention, et se référant aux dessins où :
- la figure 1 représente une vue en coupe axiale d'un capteur de position et de vitesse angulaire
- la figure 2 représente une vue en coupe médiane du même capteur
- la figure 3 représente une vue en coupe médiane du même capteur dans une position différente
- la figure 4 représente une vue en coupe axiale d'un deuxième exemple de réalisation d'un capteur angulaire
- la figure 5 représente une vue en coupe axiale d'un troisième mode de réalisation
- la figure 6 représente une vue en coupe transversale d'un capteur linéaire.
- la figure 7 représente une vue en coupe d'une variante de capteur linéaire.

Le capteur représenté en figure (1) comporte une structure statorique comprenant une première partie (1) fixe et une deuxième partie (2) solidaire d'un aimant tubulaire (3). Les deux parties statoriques (1), (2) sont constituées en un matériau magnétique doux à perméabilité élevée et à faible hystérésis magnétique. A titre d'exemple, les parties statoriques peuvent être réalisées en fer pur recuit ou en un alliage fer-nickel recuit du type ANHYSTER D ou MUMETAL commercialisés par la société CREUSOT LOIRE, ou encore en fer ou en fer-nickel fritté.

L'aimant tubulaire (3) est réalisé par association de deux parties aimantées radialement en sens opposé, ou encore par aimantation d'une pièce tubulaire en SAMARIUM COBALT 1/5 moulé isotrope ou anisotrope à orientation radiale. L'aimant (3) présente deux paires de pôles, c'est à dire qu'à sa périphérie on voit un pôle NORD sur un angle peu inférieur à 180° et un pôle SUD sur le secteur diamétralement opposé, d'un angle également peu inférieur à 180°. Entre les deux paires de pôles se place deux zones de transition (6), (7) dont les dimensions dépendent de la qualité du matériel d'aimantation et/ou des techniques de fabrication de cet organe mobile.

La bague constituant la deuxième partie statorique (2) et l'aimant tubulaire (3) sont assemblés par collage et sont montés sur un arbre d'accouplement (4).

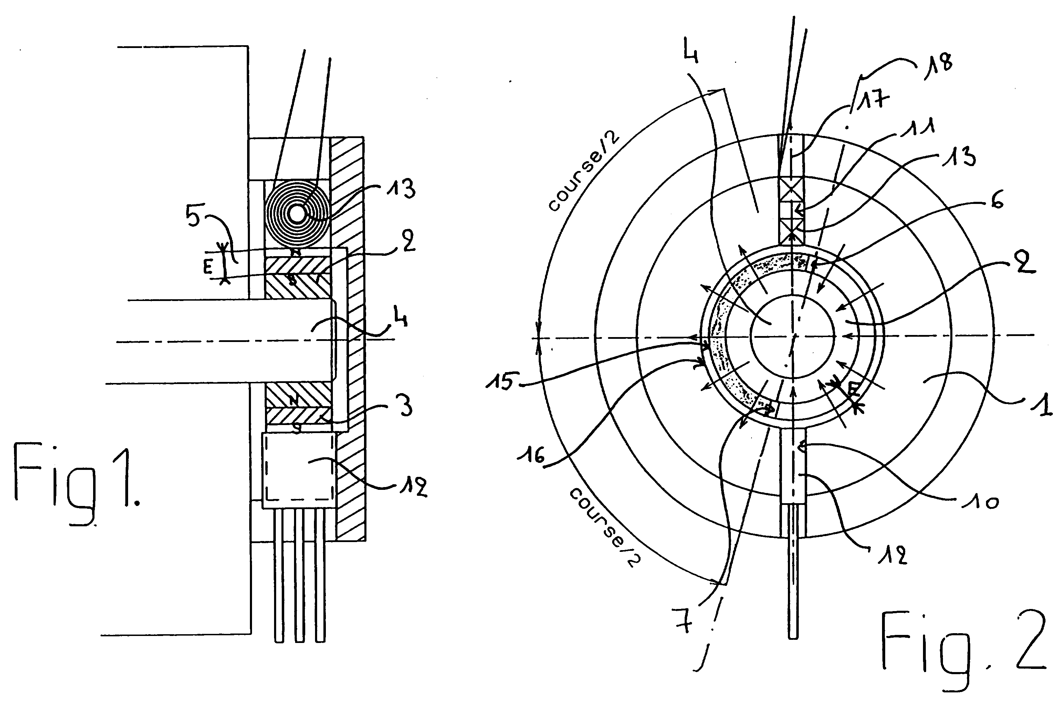

La partie statorique fixe (1) est séparée de la partie statorique mobile (2) par un entrefer (5) d'une longueur E. Comme représenté en figure 2, la partie statorique fixe (1) est constituée par deux demi-bagues (8), (9) réalisées en un matériau magnétique doux de préférence à perméabilité élevée et à faible hystérésis. La partie statorique (1) présente deux cavités radiales (10), (11) constituant des entrefers secondaires et dans lesquelles sont logées respectivement une sonde de Hall (12) et une bobine électrique (13). La longueur de ces entrefers radiaux mesurée perpendiculairement au plan de symétrie passant par le milieu des deux entrefers est de l'ordre du millimètre.

La sonde de Hall (12) est de préférence du type à amplificateur intégré dans le même boîtier, ce qui permet de n'avoir que trois fils et de disposer d'un signal électrique de plus grande amplitude, peu sensible aux interférences électriques. A titre d'exemple, la sonde de Hall est du type UGN 3503 commercialisée par la société SPRAGUE.

La bobine électrique (13) est constituée par un enroulement d'axe perpendiculaire aux faces du stator définissant l'entrefer secondaire (11). Cet enroulement comporte quelques centaines de spires de fils de cuivre.

L'entrefer principal (5) sera choisi aussi faible que possible, par exemple pour un capteur de rayon moyen R de 5 millimètres au centre du rotor et pour une partie aimantée d'une épaisseur de 1 millimètre, le jeu entre la surface extérieure (15) de la partie aimantée (3) et la surface intérieure (16) de la partie statorique (1) sera de l'ordre de 0,2 millimètres. Dans cet exemple, le rapport L/E est de 13,
L désignant la longueur d'un pôle magnétique
L étant peu inférieur à 5 mm x π = 15,7 mm
E désignant la dimension de l'entrefer (5) soit 1 mm + 0,2 mm = 1,2 mm

Dans la position représentée en figure 2, le plan diamétral (18) de l'aimant passant par les zones de transition (6), (7) est angulairement voisin du plan de symétrie diamétral (17) du stator passant par le milieu des entrefers secondaires (10), (11). La différence est d'environ 15°. Dans ces conditions, la majeure partie du flux engendré par une paire de pôles se referme à travers lesdits entrefers secondaires (10), (11) avec celui engendré par l'autre paire de pôles. Dans la mesure ou la réalisation mécanique est bonne, chaque entrefer véhicule un flux égal, et les inductions dans ces deux entrefers secondaires sont égales et maximales. Pour un angle inférieur à 15°, la zone de transition (6), (7) se rapproche de façon excessive de l'entrefer secondaire respectivement (10), (11) et il en résulte une discontinuité magnétique perturbant la réponse du capteur.

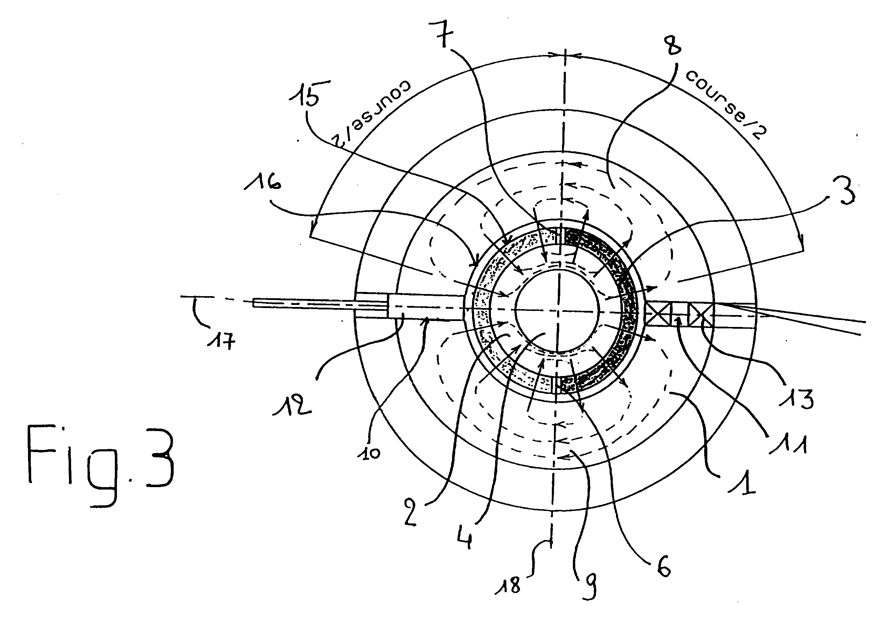

Dans la position représenté sur la figure 3, le plan diamétral (18) de l'aimant passant par les zones de transition (6), (7) et le plan de symétrie diamétral (17) du stator passant par le milieu des entrefers secondaires (10), (11) forment un angle de 90°. Dans ce cas, aucun flux ne passe par les entrefers secondaires (10), (11) et l'induction y est nulle. Pour un angle plus important de l'ordre de 165°, il est clair que l'induction est égale en amplitude et de signe opposé à l'induction correspondant à la figure 2. Grâce au grand rapport L/E et à la caractéristique de l'aimant choisi, l'induction varie linéairement en fonction de la position angulaire sur une plage comprise entre 15° et 165°, soit sur environ 150°. La partie statorique fixe (1) et la partie statorique mobile (2) doivent avoir une section suffisante pour ne saturer en aucun point. De plus, afin d'obtenir une bonne linéarité, la réluctance du stator doit être faible devant celle des entrefers secondaires. Il est clair que si on augmente le rayon de l'aimant (3) pour une même dimension de l'entrefer, et pour une même largeur de la zone de transition (6), (7), la course à réponse linéaire est augmentée et peut atteindre des valeurs peu inférieures à 180°, de l'ordre de 170°. En l'absence de butée de limitation de la course de l'organe mobile, la réponse du capteur sur un tour complet ressemble à une dent de scie symétrique.

Pour réduire le couple d'entraînement du capteur dû à la variation du point de fonctionnement de l'aimant et diminuer les perturbations parasites engendrées par le capteur sur le système mesuré, il est préférable de réduire la variation du point de fonctionnement de l'aimant et en conséquence de réduire la réluctance des entrefers dans lequel ou dans lesquels sont placées la ou les sondes. Pour cela, il convient de choisir une sonde mince et d'augmenter la surface de cet entrefer secondaire.

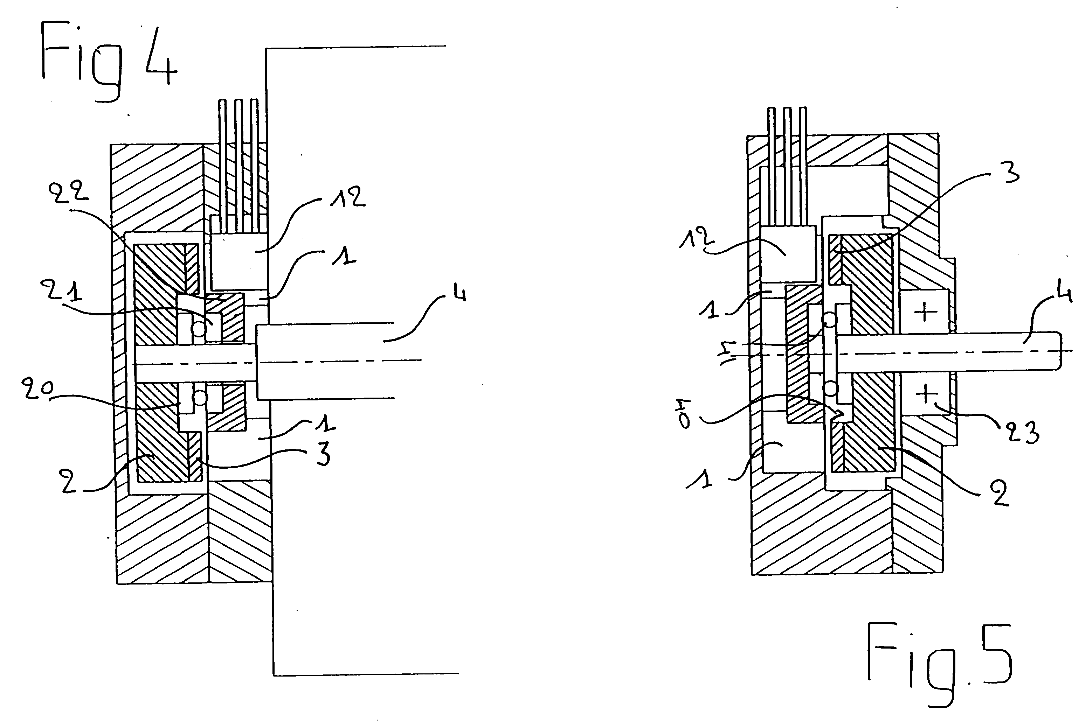

La figure 4 représente une vue en coupe médiane d'une autre forme de réalisation d'un capteur selon l'invention. Comme dans l'exemple décrit dans ce qui précède, la stator est constitué par une partie fixe (1) dont la forme est sensiblement identique à la forme de la partie fixe précédemment décrite, et une partie (2) mobile en forme de disque. L'aimant (3) est constitué par deux demi-rondelles aimantées transversalement en sens opposé. L'aimant (3) est collé sur l'une des faces de la partie statorique mobile 2. A titre d'exemple, le diamètre extérieur de l'aimant est de 16 millimètres et le diamètre intérieur de 8 millimètres, son épaisseur est de un millimètre et le jeu axial entre l'aimant et la surface la plus proche de la partie statorique fixe (1) est d'environ 0,3 millimètre. Le rayon moyen de l'aimant (3) est de 6 millimètres et le rapport entre la largeur du pôle et la dimension de l'entrefer mesurée entre les deux parties statoriques est d'environ 15. Chaque pôle magnétique a la forme d'un secteur circulaire d'environ 180° d'ouverture. Les forces magnétiques attirent l'organe mobile contre la partie statorique fixe 1. Pour empêcher le contact entre les parties mobiles et la partie fixe, le déplacement axial est limité par une butée à billes (20) dont la bague (21) est isolés magnétiquement du stator (1) par une pièce non magnétique (22). Le positionnement et le guidage peuvent être assurés exclusivement par les forces d'attraction magnétique et la butée à bille (20), à l'exclusion de toute autre guidage mécanique. Il en résulte une grande résistance aux chocs et vibrations, et une possibilité d'autoadaptation à des défauts d'alignement de l'axe d'accouplement (4).

La figure 5 représente une vue en coupe d'une variante du mode de réalisation précédent. La position du stator et du rotor ont été inversées afin de simplifier l'assemblage. L'axe d'accouplement (4) est guidée latéralement, mais pas axialement, par un palier (23).

Dans un cas extrême, la partie mobile (2) présente un alésage (40) suffisamment profond pour permettre le logement de la butée à bille (41). Dans ce cas, le stator (1) peut être constitué par un disque plein présentant une simple fente diamétrale.

Dans ce cas, les deux entrefers sont disposés dans le prolongement l'un de l'autre et se réduisent à une fente unique. De ce fait, on étendra la notion "deux entrefers" au sens du présent brevet à une telle fente.

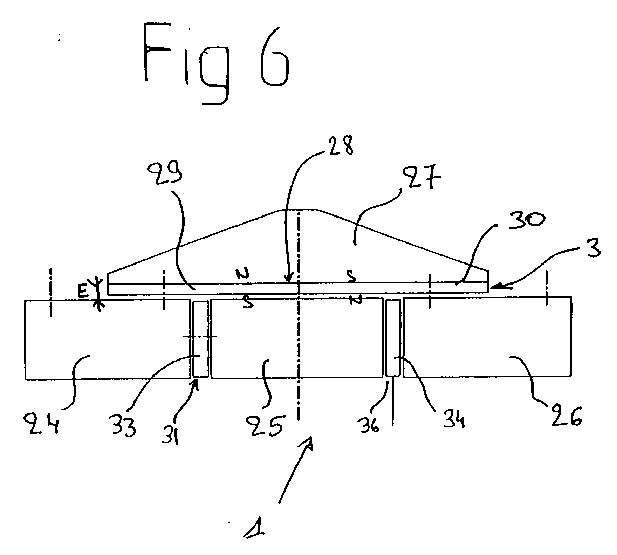

La figure 6 représente une vue en coupe d'un actionneur linéaire. La partie fixe (1) du stator présente trois pôles magnétiques respectivement (24, 25, 26). La partie statorique mobile (27) est solidaire d'un aimant mince (28) présentant deux paires de pôles (29, 30) en sens opposés. La partie statorique fixe (1) présente un premier entrefer secondaire (31) dans lequel est logé une sonde de Hall (33) et un deuxième entrefer secondaire (36) dans lequel est logée soit une bobine électrique (34), soit une deuxième sonde de Hall. Le plan médian des entrefers secondaires (31, 36) est perpendiculaire au plan de l'entrefer principal (5). L'organe mobile se déplace linéairement, la course utile étant limitée par deux positions extrêmes dans lesquelles la zone de transition (35) entre les deux paires de pôles de l'aimant (3) arrive au voisinage de l'un ou de l'autre des entrefers secondaires (31), (36), "au voisinage" signifiant à une distance correspondant sensiblement à la largeur de l'entrefer principal (5).

Dans l'exemple décrit, l'aimant mince est plan. Il peut bien sur être réalisé sous des formes diverses, notamment en forme de tuile ou de cylindre dont l'axe correspond à l'axe du déplacement linéaire de l'organe mobile, les parties statoriques (24, 25, 26) se présentent alors sous forme de rondelles cylindriques.

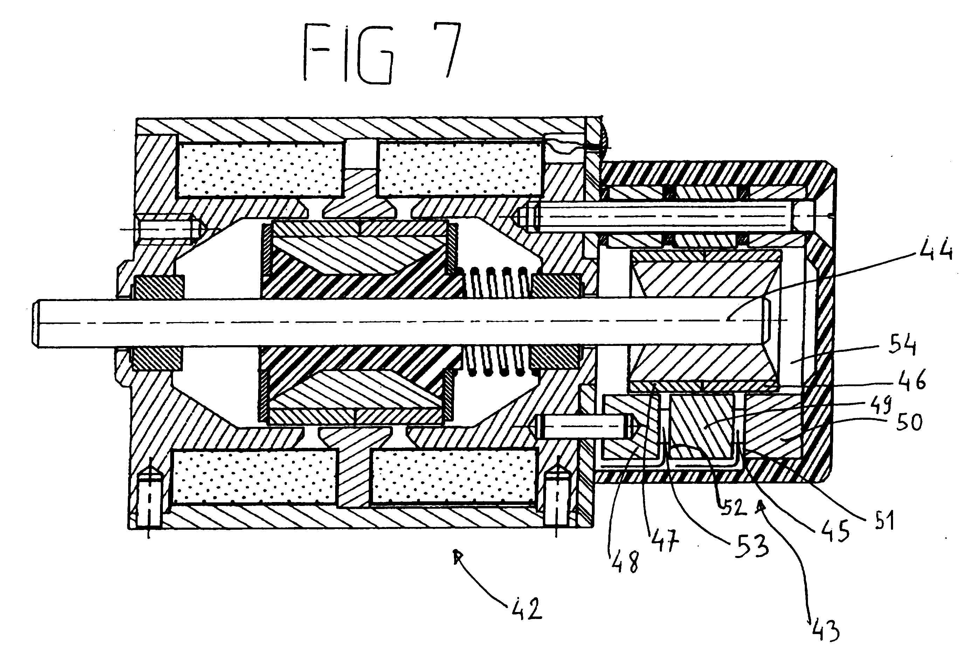

La figure 7 représente une vue en coupe d'un capteur linéaire associé à un actionneur (42) dont la structure et le fonctionnement ne sont pas explicités.

L'étage capteur (43) présente une symétrie axiale par rapport à l'axe longitudinale (44). il comporte un organe mobile (45) solidaire de l'axe de l'actionneur et comportant deux aimants annulaires (46, 47) orientés radialement, en sens opposés. Le stator est constitué de trois pièces feromagnétiques (48, 49, 50) de forme annulaire. Dans ce mode de réalisation, le rapport L/E est peu supérieure à 3.
Deux entrefers (51 et 52) s'étendant radialement permettent le positionnement des sondes de Hall (53), (54).

La présente invention n'est aucunement limitée aux exemples qui précèdent, mais s'étend au contraire à toutes les variantes de réalisation.

## Revendications

1. Capteur de position pour la délivrance d'un signal linéaire, constitué par un stator (12) comportant un entrefer principal (5) et deux entrefers secondaires (10, 11) sensiblement perpendiculaires à l'entrefer principal (5), et par une sonde de Hall (12) placée à l'intérieur de l'un desdits entrefers secondaires (10, 11) et mesurant la variation de l'induction dans ledit entrefer secondaire (10, 11), le capteur comportant en outre un organe mobile (3, 4) muni d'un aimant (3) solidaire d'un moyen d'accouplement, et le stator est constitué par une première partie fixe (1) munie desdits entrefers secondaires (10, 11) et une deuxième partie (2), les deux parties du stator (1, 2) définissant entre elles l'entrefer principal (5) dans lequel se déplace ledit aimant (3), ledit aimant (3) étant constitué par une ou deux parties minces aimantées transversalement par rapport à l'entrefer principal (5), et qui est réalisé en un matériau présentant dans tous les domaines de travail une caractéristique de désaimantation pratiquement linéaire, et une perméabilité réversible proche de celle de l'air.

2. Capteur de position selon la revendication 1, caractérisé en ce que l'organe mobile présente au moins deux parties minces adjacentes, aimantées transversalement en sens alterné.

3. Capteur de position selon la revendication 1 ou 2, caractérisé en ce que le rapport L/E est supérieur à 3, où L désigne la largeur d'un pôle magnétique et où E désigne la largeur de l'entrefer principal (5).

4. Capteur de position selon l'une quelconque des revendications précédentes, caractérisé en ce que le stator (1) est constitué par une première partie (1) fixe et une deuxième partie (2) solidaire de la partie aimantée (3) de l'organe mobile.

5. Capteur de position selon l'une quelconque des revendications 1 à 4, caractérisé en ce que le stator est constitué par deux bagues coaxiales, la bague extérieure comportant au moins deux entrefers radiaux (10), (11) dans l'un desquels est disposé la sonde de Hall (12), l'organe mobile étant constitué par un aimant annulaire aimanté radialement, ledit aimant étant coaxiale auxdites bagues statoriques et mobile en rotation autour de l'axe de révolution, la course dudit organe mobile étant de C/2 de part et d'autre d'une positon médiane dans laquelle la zone de transition entre les deux parties aimantées de l'organe mobile est dans un plan perpendiculaire au plan de symétrie (17) de l'entrefer secondaire (10) radial dans lequel est logé la sonde de Hall (12), C étant légèrement inférieure à Π.

6. Capteur selon l'une quelconque des revendications précédentes, caractérisé en ce que L/E est supérieur à 6.

7. Capteur de position selon l'une quelconque des revendications 1 à 4, caractérisé en ce que l'organe mobile est constitué par un disque mince présentant deux parties aimantées transversalement s'étendant chacune sur environ Π, le stator étant constitué d'une première partie fixe présentant deux entrefers radiaux secondaires dans l'un desquels est logé une sonde de Hall (12) et une deuxième partie constituée par un disque en un matériau doux.

8. Capteur de position selon la revendication précédente caractérisé en ce que l'entrefer est défini par une butée à bille (20) disposée entre l'organe mobile et la partie statorique fixe.

9. Capteur de positon selon la revendication 5, ou la revendication 7, caractérisé en ce qu'il comporte deux sondes de Hall logées chacune dans l'un des entrefers radiaux secondaires diamétralement opposés.

10. Capteur de position selon l'une quelconque des revendications 1 à 4, caractérisé en ce que le stator est constitué par une partie fixe présentant trois pôles statoriques (24, 25, 26) et une deuxième partie statorique (27) définissant entre elles un entrefer (5) dans lequel l'organe mobile se déplace linéairement.

11. Capteur selon l'une quelconque des revendications précédentes caractérisé en ce qu'une bobine captrice (13) ou (34) de la variation temporelle du flux magnétique est logée dans l'un des entrefers secondaires (11) ou (32).

12. Capteur selon l'une quelconque des revendications précédentes caractérisé en ce que la partie statorique fixe comporte en outre un logement pour une sonde de température.

## Patentansprüche

1. Lagesensor für die Abgabe eines linearen Signals, gebildet durch einen Stator (1, 2), umfassend einen Hauptpolluftspalt (5) und zwei sekundäre Luftspalte (10, 11), die im wesentlichen senkrecht zum Hauptpolluftspalt (5) stehen, und durch eine Hallsonde (12), die im Inneren eines der sekundären Luftspalte (10, 11) angeordnet ist und die Schwankung der Induktion in dem sekundären Luftspalt (10, 11) mißt, wobei der Lagesensor unter anderem ein bewegliches Organ (3, 4) umfaßt, das mit einem einstückigen Magneten (3) eines Verbindungsmittels versehen ist und wobei der Stator aus einem ersten festen Teil gebildet wird, der mit den sekundären Luftspalten (10, 11) und einem zweiten Teil (2) versehen ist, wobei die zwei Teile des Stators (1, 2) unter sich den Hauptpolluftspalt (5) definieren, in dem sich der Magnet (3) bewegt, wobei der Magnet (3) aus einem oder zwei dünnen Teilen, die quer in bezug auf den Hauptpolluftspalt (5) magnetisiert werden, gebildet wird, und aus einem Material besteht, das in allen Arbeitsbereichen eine praktisch lineare Entmagnetisierungscharakteristik und eine reversible Durchlässigkeit aufweist, die der von Luft nahe kommt.

2. Lagesensor nach Anspruch 1, dadurch gekennzeichnet, daß das bewegliche Organ mindestens zwei benachbarte dünne Teile aufweist, die quer in abwechselnder Richtung magnetisiert werden.

3. Lagesensor nach Anspruch 1 oder 2, dadurch gekennzeichnet, daß das Verhältnis L/E über 3 liegt, wobei L die Breite eines Magnetpols und E die Breite des Hauptpolluftspalts (5) bezeichnet.

4. Lagesensor nach einem der vorhergehenden Ansprüche, dadurch gekennzeichnet, daß der Stator (1) aus einem ersten festen Teil (1) und einem zweiten einstückigen Teil (2) des magnetisierten Teils (3) des beweglichen Organs gebildet wird.

5. Lagesensor nach einem der Ansprüche 1 bis 4, dadurch gekennzeichnet, daß der Stator aus zwei koaxialen Ringen gebildet wird, wobei der äußere Ring mindestens zwei radiale Luftspalte (10, 11) umfaßt, wobei in einem dieser die Hallsonde (12) angeordnet ist, wobei das bewegliche Organ aus einem ringförmigen Magnet gebildet wird, der radial magnetisiert wird, wobei der Magnet zu den statorischen Ringen koaxial und in der Drehung um die Umdrehungsachse beweglich ist, wobei der Lauf des beweglichen Organs von C/2 nach beiden Seiten von einer mittleren Position ist, in der der Bereich des Übergangs zwischen den zwei magnetisierten Teilen des beweglichen Organs in einer Ebene ist, die senkrecht zur Symmetrieebene (17) des sekundären radialen Luftspalts (10) steht, in dem die Hallsonde (12) untergebracht ist, wobei C etwas unter Π liegt.

6. Lagesensor nach einem der vorhergehenden Ansprüche, dadurch gekennzeichnet, daß L/E größer als 6 ist.

7. Lagesensor nach einem der Ansprüche 1 bis 4, dadurch gekennzeichnet, daß das bewegliche Organ aus einer dünnen Scheibe gebildet wird, die zwei quer magnetisierte Teile aufweist, von denen sich jeder auf etwa Π erstreckt, wobei der Stator aus einem ersten festen Teil gebildet wird, der zwei radiale sekundäre Luftspalte aufweist, wobei in einem davon eine Hallsonde (12) und ein zweiter Teil, der aus einer Scheibe aus einem weichen Material gebildet wird, untergebracht sind.

8. Lagesensor nach einem der vorhergehenden Ansprüche, dadurch gekennzeichnet, daß der Luftspalt durch ein Axialkugellager (20) definiert wird, das zwischen dem beweglichen Organ und dem festen statorischen Teil angeordnet ist.

9. Lagesensor nach Anspruch 5 oder Anspruch 7, dadurch gekennzeichnet, daß er zwei Hallsonden umfaßt, wobei jede in einem der radialen sekundären, diametral einander gegenüberliegenden Luftspalte untergebracht ist.

10. Lagesensor nach einem der Ansprüche 1 bis 4, dadurch gekennzeichnet, daß der Stator aus einem festen Teil gebildet wird, der drei statorische Pole (24, 25, 26) und einen zweiten statorischen Teil (27) aufweist, die unter sich einen Luftspalt (5) definieren, in dem sich das bewegliche Organ linear bewegt.

11. Lagesensor nach einem der vorhergehenden Ansprüche, dadurch gekennzeichnet, daß eine Aufnehmerspule (13) oder (34) für die vorübergehenden Schwankung des Magnetflusses in einem der sekundären Luftspalte (11) oder (32) untergebracht ist.

12. Lagesensor nach einem der vorhergehenden Ansprüche, dadurch gekennzeichnet, daß der feste statorische Teil unter anderem eine Unterbringung für eine Temperatursonde umfaßt.

## Claims

1. An attitude sensor for delivering a linear signal, constituted by a stator (12) comprising a main pole air gap (5) and two secondary air gaps (10,11) approximately perpendicular to the main pole air gap (5) and by a Hall probe (12) placed inside one of said secondary air gaps (10, 11) and measuring the variation of the induction inside said secondary air gap (10, 11), the sensor comprising further a movable organ (3, 4) provided with a magnet (3) firmly attached to a coupling means and the stator is constituted by a first fixed part (1) provided with said secondary air gaps (10, 11) and a second part (2), the two parts of the stator (1, 2) defining between them the main pole air gap (5) in which said magnet (3) moves, said magnet (3) being constituted by one or two thin parts transversely magnetized in relation to the main pole air gap (5) and being made of a material having in all the work fields, a caracteristic of demagnetization nearly linear and a reversible permeability close of the one of the air.

2. An attitude sensor according to claim 1, characterized in that the movable organ has at least two thin adjacent parts, transversely magnetized in alternate direction.

3. An attitude sensor according to claim 1 or 2, characterized in that the ratio L/E is higher to 3, where L refers to the width of a magnetic pole and E refers to the width of the main pole air gap (5).

4. An attitude sensor according to any of the above claims, characterized in that the stator (1) is constituted by a first fixed part (1) and a second part (2) firmly attached to the magnetic part (3) of the movable organ.

5. An attitude sensor according to any one of the claims 1 to 4, characterized in that the stator is constituted by two coaxial rings, the outer ring comprising at least two radial air gaps (10, 11) in one of which the Hall probe (12) is disposed, the movable organ being constituted by an annular magnet radially magnetized, said magnet being coaxial to said statoric rings and rotatable around the revolution axis, the stroke of said movable organ being of C/2 on each side of a median position in which the transition area between the two magnetic parts of the movable organ is located in a plane perpendicular to the symmetry plane (17) of the secondary radial air gap (10) in which the Hall probe (12) is housed, C being slightly lower to pi.

6. An attitude sensor according to any of the above claims, characterized in that L/E is higher to 6.

7. An attitude sensor according to any one of the claims 1 to 4, characterized in that the movable organ is constituted by a thin disk having two parts transversely magnetized, each extending on approximately pi, the stator being constituted of a first fixed part having two radial secondary air gaps in one of which a Hall probe (12) is located and a second part constituted by a disk made of soft material.

8. An attitude sensor according to the preceding claim, characterized in that the air gap is defined by a thrust ball bearing (20) disposed between the movable organ and the fixed statoric part.

9. An attitude sensor according to claim 5 or 7, characterized in that it comprises two Hall probes each housed in one of the radial secondary air gaps diametrically opposite.

10. An attitude sensor according to any one of the claims 1 to 4, characterized in that the stator is constituted by a fixed part having three statoric poles (24, 25, 26) and a second statoric part (27) defining between them an air gap (5) in which the movable organ moves linearly.

11. A sensor according to any of the above claims, characterized in that a coil (13) or (34) intercepting the temporal variation of the magnetic flux is housed in one of the secondary air gap (11) or (32).

12. A sensor according to any of the above claims, characterized in that the fixed statoric part comprises further a housing for a temperature probe.
